# EUROPÄISCHE PATENTANMELDUNG

(11) **EP 2 144 350 A2**
(43) Veröffentlichungstag der Anmeldung: **13.01.2010**
(21) Anmeldenummer: 09100326.9
(22) Anmeldetag: 10.06.2009
(51) Int. Cl.: H02K 1/27

(54) **Rotor für einen Elektromotor sowie Verfahren zu seiner Herstellung**

(30) Priorität: 11.07.2008 DE 102008040348
(71) Anmelder: Robert Bosch GmbH, 70442 Stuttgart (DE)
(72) Erfinder: Hawighorst, Achim, 77830 Buehlertal (DE); Huesges, Mario, 77830 Buehlertal (DE)

(57) **Zusammenfassung**

Die Erfindung betrifft einen Rotor für einen Elektromotor, aufweisend mindestens zwei Permanentmagnete, welche an einer Rückflusssohle befestigt sind wobei zur Befestigung der Permanentmagnete mindestens ein Halteelement vorgesehen ist, welches einstückig mit der Rückflusssohle verbunden ist. Weiterhin betrifft die Erfindung ein Verfahren zur Herstellung eines Rotors für einen Elektromotor, bei welchem mindestens ein Permanentmagnet mit mindestens einem Halteelement an einer Rückflusssohle befestigt wird wobei mindestens ein Halteelement verwendet wird, welches einstückig mit der Rückflusssohle verbunden ist und zur Befestigung mindestens eines Permanentmagneten plastisch verformt wird.

## Beschreibung

Die Erfindung betrifft einen Rotor für einen Elektromotor, welcher mindestens zwei Permanentmagnete aufweist, welche an einer Rückflusssohle befestigt sind. Weiterhin betrifft die Erfindung ein Verfahren zur Herstellung eines solchen Rotors.

Rotoren der eingangs genannten Art werden insbesondere für elektronisch kommutierende Gleichstrommotoren eingesetzt. Bei solchen Motoren weist der Stator eine Anordnung aus Magnetspulen auf, welche mit Schaltelementen, beispielsweise Transistoren oder IGBT, wechselweise mit einem Strom beaufschlagt werden. Durch entsprechendes Schalten der Spulen kann von der Spulenanordnung ein rotierendes Magnetfeld bereitgestellt werden.

Der Rotor solcher Elektromotoren weist einen magnetischen Mehrpol auf, welcher an das rotierende Magnetfeld ankoppelt und dadurch in Rotation versetzt wird. Sofern der magnetische Mehrpol aus Permanentmagneten gebildet wird, weist der Rotor keine stromführenden Teile auf. Dadurch können Schleifringe oder Kommutatoren zur Stromzuführung eingespart und die Betriebszuverlässigkeit erhöht werden.

Um den magnetischen Rückfluss zwischen mehreren, den magnetischen Mehrpol bildenden Permanentmagneten sicherzustellen, weist der Rotor zusätzlich eine Rückflusssohle auf, auf welcher die einzelnen Permanentmagnete befestigt sind.

Zur Befestigung der Permanentmagnete auf der Rückflusssohle offenbart die DE 10 2006 036 392 A1, die Rückflusssohle und die Permanentmagnete zusammen mit einer Rotorwelle in einem mehrstufigen Spritzgussverfahren in Kunststoff einzubetten. Nachteilig an diesem Stand der Technik ist jedoch, dass die rotierenden Teile mit hoher Präzision relativ zueinander in der Spritzgussform angeordnet werden müssen, um eine Unwucht zu vermeiden. Da weiterhin vorgeschlagen wird, zunächst mittels eines ersten Spritzgussverfahrens eine Halteelement für die Permanentmagnete an der Rückflusssohle bereitzustellen und dann in einem zweiten Verfahrensschritt die Rückflusssohle zusammen mit der Achse und den Permanentmagneten vollständig mit einem Kunststoff zu umspritzen, stellt sich das Problem der Positionierung der Bauteile in der Spritzgussform gleich zweimal.

Ausgehend vom Stand der Technik liegt der Erfindung die Aufgabe zugrunde, einen Rotor sowie ein Verfahren zu seiner Herstellung bereitzustellen, welches weniger Verfahrensschritte und weniger Fehlerquellen aufweist.

Die Aufgabe wird erfindungsgemäß gelöst durch einen Rotor für einen Elektromotor, aufweisend mindestens zwei Permanentmagnete, welche an einer Rückflusssohle befestigt sind, wobei zur Befestigung der Permanentmagnete mindestens ein Halteelement vorgesehen ist, welches einstückig mit der Rückflusssohle verbunden ist.

Weiterhin besteht die Lösung der Aufgabe in einem Verfahren zur Herstellung eines Rotors für einen Elektromotor, bei welchem mindestens ein Permanentmagnet mit mindestens einem Halteelement an einer Rückflusssohle befestigt wird, wobei mindestens ein Halteelement verwendet wird, welches einstückig mit der Rückflusssohle verbunden ist und zur Befestigung mindestens eines Permanentmagneten plastisch verformt wird.

Erfindungsgemäß wird vorgeschlagen, bei der Fertigung der Rückflusssohle Halteelemente vorzusehen, welche einstückig mit der Rückflusssohle verbunden sind. Dies kann beispielsweise dadurch erfolgen, dass die Rückflusssohle aus einem Stapel weichmagnetischen Bleches gefertigt ist. Die einzelnen Blechteile können dabei mittels eines Stanzprozesses bereitgestellt werden. Zur Bildung der Rückflusssohle werden dann eine Mehrzahl solcher Stanzteile übereinander gelegt und miteinander verbunden, beispielsweise durch Nieten. Die Halteelemente ergeben sich dabei, indem mit zwei verschiedenen Stanzwerkzeugen einzelne Stanzteile mit mindestens einem solchen Halteelement und andere Stanzteile ohne Halteelement gefertigt werden. Die Stanzteile, welche mindestens ein Halteelement aufweisen, werden dann an vorher festgelegter Stelle des Stapels eingebaut.

In einer weiteren Ausführungsform der Erfindung kann die Rückflusssohle aus einem Kunststoff gefertigt werden, welcher mit einem Metall oder einer Legierung gefüllt ist. Zur Füllung des Kunststoffes eignet sich dabei insbesondere ein weichmagnetisches Material. Die Halteelemente lassen sich dann bei der Fertigung der Rückflusssohle in einem Spritzgießverfahren bereitstellen.

Die Halteelemente können fallweise zwischen zwei Permanentmagneten angeordnet sein. Auf diese Weise können zwei Permanentmagnete zumindest teilweise mit einem Halteelement fixiert werden. Fallweise können auch Halteelemente vorgesehen sein, welche nur einen Permanentmagneten fixieren, beispielsweise im Randbereich des Permanentmagneten oder durch eine im Permanentmagneten angebrachte Bohrung.

Zur Fertigung eines Rotors mit der erfindungsgemäß vorgeschlagenen Rückflusssohle werden die Permanentmagnete in ihre vorbestimmte Position auf der Rückflusssohle gebracht, beispielsweise zwischen zwei Halteelemente. Sodann werden die Halteelemente plastisch verformt, um einen Formschluss zwischen den Halteelementen und den Permanentmagneten zu erzielen.

Die plastische Verformung der Halteelemente kann im Falle von thermoplastischen Halteelementen beispielsweise durch Umschmelzen erfolgen. Sofern die Halteelemente aus einem Metall oder einer Legierung bestehen, können diese durch Krafteinwirkung eines Formwerkzeuges verformt werden. Hierzu eignet sich beispielsweise eine hydraulische Presse oder ein Schlaghammer. Dieser erzeugt zusammen mit dem Formwerkzeug beispielsweise einen Bördel an dem Halteelement.

Das erfindungsgemäß vorgeschlagene Halteelement kann alternativ zu den aus dem Stand der Technik bekannten Befestigungen von Permanentmagneten an der Rückflusssohle eingesetzt werden. Fallweise ist es jedoch auch möglich, das erfindungsgemäß vorgeschlagene Halteelement mit weiteren Befestigungen aus dem Stand der Technik zu kombinieren, beispielsweise durch Kleben, Nieten oder Einbetten in Kunststoff. Die Erfindung lehrt nicht, das vorgeschlagene Halteelement stets und unter allen Umständen als einzige Befestigung vorzusehen.

Eine besonders zuverlässige Befestigung ergibt sich bei einer Ausführungsform des Halteelementes, bei welcher ein einzelnes Halteelement aus einem ersten Teilelement und einem zweiten Teilelement besteht, welche beabstandet angeordnet sind und wobei das erste Teilelement an einem ersten Permanentmagnet anliegt und das zweite Teilelement an einem zweiten Permanentmagnet anliegt. Durch die Aufteilung des Halteelements in kleinere Untereinheiten ergibt sich eine gegenüber einem massiven Halteelement geringere Verformungskraft. Dadurch kann die Verformung der Halteelemente besonders schonend vorgenommen werden, ohne die Permanentmagnete zu zerstören.

Sofern die Permanentmagnete eine Anlagefläche aufweisen, welche gegenüber einer durch den Mittelpunkt des Rotors radial nach außen laufenden Linie geneigt ist, ergibt sich eine besonders sichere Befestigung bei gleichzeitig geringerem Materialeinsatz.

Je nach geometrischer Gestaltung der Rückflusssohle eignet sich der erfindungsgemäß vorgeschlagene Rotor als Innen- oder Außenläufer. Der Rotor kann auf eine Achse montiert werden, an welcher ein zu rotierendes Bauteil befestigt werden kann.

Fallweise kann der Rotor jedoch auch unmittelbar ein Lüfterrad oder ein Flügelrad einer Pumpe aufnehmen bzw. ein Bestandteil eines solchen Flügel- oder Lüfterrades darstellen. In einer weiteren Ausführungsform kann der vorgeschlagene Rotor ein Bestandteil eines Getriebes sein, beispielsweise ein Hohl- oder Sonnenrad eines Planetengetriebes. Auf diese Weise kann ein zum Antrieb verwendeter Elektromotor kompakt mit einem Getriebe gekoppelt werden.

Nachfolgend soll die Erfindung anhand von Ausführungsbeispielen und Figuren ohne Beschränkung des allgemeinen Erfindungsgedankens näher erläutert werden.

Figur 1 zeigt die Montage eines Permanentmagneten auf eine Rückflusssohle gemäß einer ersten Ausführungsform der Erfindung.

Figur 2 zeigt die Rückflusssohle nach Figur 1 mit montierten Permanentmagneten im Schnitt.

Figur 3 zeigt eine Aufsicht auf eine im Wesentlichen zylinderförmige Rückflusssohle mit montierten Permanentmagneten.

Figur 4 zeigt die Montage eines Permanentmagneten auf eine Rückflusssohle gemäß einer zweiten Ausführungsform der Erfindung.

Figur 5 zeigt einen Querschnitt durch den fertig gestellten Rotor gemäß Figur 4.

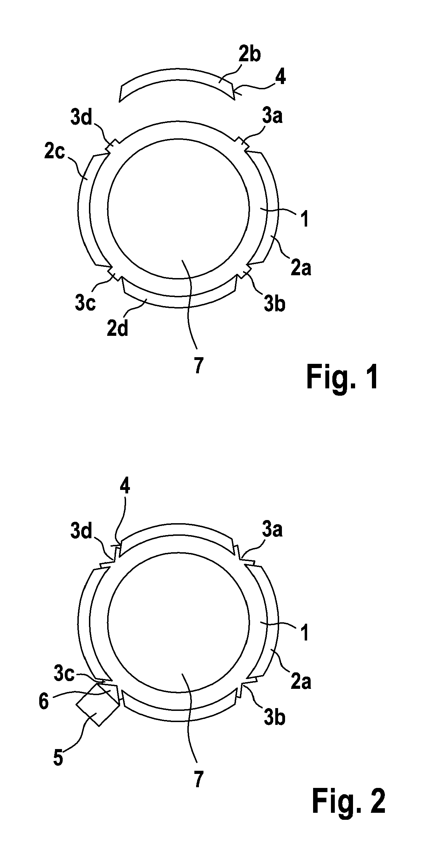

In Figur 1 ist eine im Wesentlichen zylinderförmige Rückflusssohle 1 im Querschnitt dargestellt. Die Rückflusssohle weist einen Innenraum 7 auf, welcher beispielsweise zur Aufnahme einer Rotorwelle vorgesehen sein kann. In weiteren Ausführungsformen der Erfindung kann der Innenraum 7 auch zur Aufnahme eines Stators vorgesehen sein. Weiterhin kann der Innenraum 7 ein Planetengetriebe aufnehmen, wobei die Rückflusssohle 1 als Hohlrad verwendet wird. Schließlich kann der Innenraum 7 der Rückflusssohle 1 ein Flügelrad aufnehmen, beispielsweise wenn die Rückflusssohle 1 Bestandteil eines Pumpenrades oder eines Lüfters ist. Die Erfindung lehrt insbesondere nicht die Verwendung des vorgeschlagenen Rotors zu einem bestimmten Zweck.

An der Zylindermantelfläche der Rückflusssohle 1 sind in der Figur 1 vier Halteelemente 3a, 3b, 3c und 3d sichtbar. Die Halteelemente werden dabei aus Vorsprüngen gebildet, welche einen etwa rechteckigen Querschnitt aufweisen. Insbesondere können die Vorsprünge die Form eines Quaders oder eines Zylinders aufweisen. Die Anzahl der Halteelemente 3a, 3b, 3c, 3d kann in anderen Ausführungsformen der Erfindung größer oder kleiner sein als vier. Insbesondere wird die Anzahl der Halteelemente an die Anzahl der zu befestigenden Magnete abgestimmt und kann insbesondere zwischen zwei und 32 betragen.

Die Herstellung einer Rückflusssohle gemäß Figur 1 kann beispielsweise aus einer Mehrzahl von Stanzteilen erfolgen. In diesem Fall können Stanzteile mit dem in Figur 1 gezeigten Querschnitt zusammen mit Stanzteilen von abweichendem Querschnitt, beispielsweise ohne die vorstehenden Halteelemente 3a, 3b, 3c und 3d, zu einem Stapel zusammengeführt werden, um einen Zylinder mit größerer Höhe zu bilden als die Dicke eines einzelnen Stanzteiles. In diesem Fall können die einzelnen Stanzteile weitere, in Figur 1 nicht dargestellte Bohrungen aufweisen, durch welche die Stanzteile beispielsweise vernietet werden können. In einer weiteren Ausführungsform der Erfindung kann die Rückflusssohle 1 auch aus einem Kunststoff hergestellt werden. Hierzu bietet sich insbesondere ein Spritzgussverfahren an, welches die äußere Form der Rückflusssohle 1 mit den Halteelementen 3a, 3b, 3c und 3d bereitzustellen vermag. Der Kunststoff kann zur Verbesserung des magnetischen Schlusses Partikel aus einem Metall oder einer Legierung enthalten.

Auf die Rückflusssohle 1 werden vier Magnete 2a, 2b, 2c und 2d aufgelegt. Die Magnete weisen dabei eine äußere Form auf, welche komplementär zur Außenform der Rückflusssohle 1 ist. Insbesondere ist die Breite der Magnete dahingehend beschränkt, dass diese zwischen zwei benachbarte Halteelemente eingeführt werden können. So befindet sich der Magnet 2a zwischen den Halteelemente 3a und 3b. Der Magnet 2d befindet sich zwischen den Halteelemente 3b und 3c. Der Magnet 2b kommt zwischen den Halteelementen 3a und 3d zu liegen. Die Ausmaße der Magnete 2a, 2b, 2c und 2d können dabei geringfügig größer sein als der Abstand der Halteelemente 3a, 3b, 3c und 3d, so dass sich ein strenger Sitz zwischen den Halteelementen ergibt. Auf diese Weise können die Magnete 2a, 2b, 2c, 2d bis zum nachfolgenden Bearbeitungsschritt auf der Rückflusssohle 1 fixiert werden, ohne dass es einer zusätzlichen Befestigung bedarf.

Wie in Figur 1 dargestellt können die Magnete 2 eine Anlagefläche 4 aufweisen, welche gegenüber einer durch den Mittelpunkt des Rotors radial nach außen laufenden Linie geneigt sind. Mittels einer solchen Anlagefläche kann die Höhe der Halteelemente 3a, 3b, 3c, 3d verringert werden, ohne dass die Zuverlässigkeit der Befestigung leidet. Weiterhin ist es möglich, die Halteelemente 3a, 3b, 3c, 3d im Endzustand so niedrig auszuführen, dass diese nicht über die Außenseite der Magnete 2a, 2b, 2c und 2d hinausragen. Somit werden die Halteelemente auch dann nicht beschädigt, wenn der Rotor im Betrieb des Elektromotors ein umgebendes Bauteil berührt.

Figur 2 zeigt den Querschnitt des Rotors gemäß Figur 1, nachdem die Halteelemente 3a, 3b und 3d in ihre endgültige Form gebracht wurden. Am Halteelement 3c ist ein Formwerkzeug 5 mit einer Spitze 6 angesetzt, um auch dieses Halteelement zu verformen. Das Formwerkzeug 5 wird dabei mit einer Kraft beaufschlagt, welche in etwa radial auf den Mittelpunkt der Rückflusssohle 1 zeigt.

Die Halteelemente 3a, 3b, 3c, 3d nehmen dabei eine Außenform an, welche in etwa komplementär zur Form der Spitze 6 des Formwerkzeuges 5 ist. Dabei führt die Spitze 6 des Formwerkzeuges 5 zu einem Verdrängen des Materials aus einem Bereich in der Mitte zweier benachbarter Magnete. Dieses Material fließt nachfolgend in den Randbereich, wo es die Anlagefläche 4 der Magnete 2 zumindest teilweise bedeckt. Auf diese Weise ergibt sich eine formschlüssige Fixierung des Randbereichs der Magnete 2 zwischen der ursprünglichen Außenfläche der Rückflusssohle 1 und dem verformten Bereich der Halteelemente 3a, 3b, 3c, 3d.

Sofern die Rückflusssohle 1 aus einem duktilen Material, beispielsweise einem Metall oder einer Legierung, gefertigt wurde, kann die Umformung der Halteelemente 3a, 3b, 3c, 3d meist bei derjenigen Temperatur erfolgen, welche der Rotor 1 nach Abschluss des vorhergehenden Verfahrensschrittes hat.

Sofern die Rückflusssohle 1 aus einem Kunststoffmaterial gefertigt wurde, kann es in Abhängigkeit der Materialeigenschaften des verwendeten Kunststoffes geboten sein, den Umformvorgang der Halteelemente 3a, 3b, 3c, 3d bei erhöhter Temperatur durchzuführen, um ein plastisches Verformen des Materials zu unterstützen. Hierzu kann entweder der gesamte Rotor auf eine höhere Temperatur erwärmt werden. Bevorzugt ist jedoch, das Formwerkzeug 5 oder zumindest die Spitze 6 auf eine höhere Temperatur zu erwärmen und auf diese Weise selektiv nur den Halteelementen 3a, 3b, 3c, 3d beim Umformprozess thermische Energie zuzuführen.

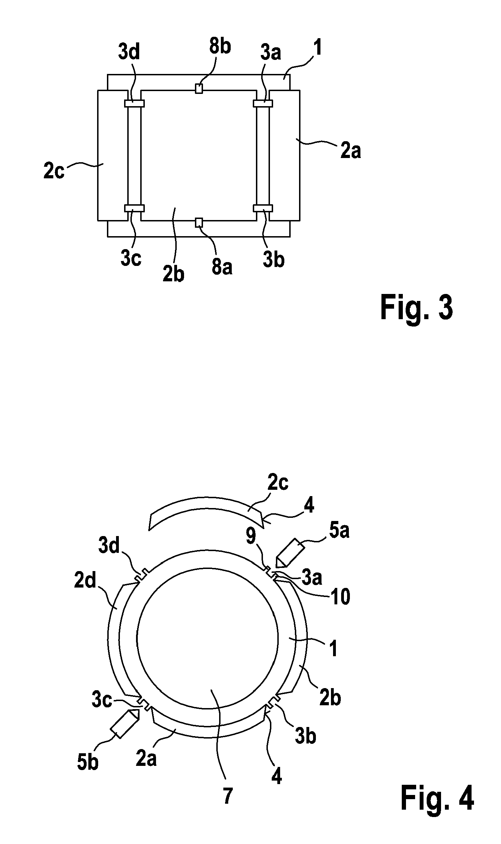

Figur 3 zeigt eine Aufsicht auf den in Figuren 1 und 2 im Schnitt dargestellten Rotor. Aus Figur 3 ist ersichtlich, dass die Rückflusssohle 1 in etwa die Form eines Zylinders aufweist. Weiterhin ist in Figur 3 ein Permanentmagnet 2b vollständig dargestellt. Zwei benachbarte Permanentmagnete 2a und 2c sind teilweise durch die Rückflusssohle 1 verdeckt, ebenso wie der vierte Magnet 2d.

Jeweils zwischen zwei benachbarten Magneten 2a und 2b sind zwei Halteelemente 3a und 3b angeordnet. Zwischen dem Magneten 2c und 2b sind zwei Halteelemente 3d und 3c angeordnet. Die Halteelemente sind wie in Zusammenhang mit Figur 2 beschrieben plastisch verformt, so dass diese in der Aufsicht der Figur 3 die Magneten 2 teilweise überdecken. Durch die Zylindermantelfläche der Rückflusssohle 1 und die Halteelemente 3 sind die Magnete 2 in radialer Richtung vollständig fixiert. Um ein axiales Verrutschen der Magnete 2 auf der Rückflusssohle 1 zu verhindern, befinden sich weitere Halteelemente 8a und 8b beiderseits des Magneten 2b. In gleicher Weise werden auch die übrigen Magnete durch weitere Halteelemente 8 axial in ihrer Bewegung eingeschränkt. Die Halteelemente 8 weisen dabei eine ähnliche Form und eine ähnliche Funktion auf wie die Halteelemente 3a, 3b, 3c, 3d mit dem einzigen Unterschied, dass die Halteelemente 8 nur einseitig an einem Magneten 2 anliegen und daher jeweils nur einen Magneten in einer Richtung fixieren.

Figur 4 zeigt eine weitere Ausführungsform der Erfindung. Auch Figur 4 zeigt eine Rückflusssohle 1 eines Rotors. Auch die Rückflusssohle 1 nach Figur 4 weist einen Innenraum 7 auf, welcher zur Aufnahme eines Stators, einer Rotorwelle, eines Pumpenrades, eines Getriebeteiles oder eines Lüfterrades vorgesehen ist. Auch im Ausführungsbeispiel nach Figur 4 ist die Rückflusssohle 1 zur Aufnahme von vier Magneten 2a, 2b, 2c und 2d vorgesehen. Zwischen zwei benachbarten Magneten befindet sich im Schnitt jeweils ein Halteelement 3a, 3b, 3c und 3d. Der Abstand der Halteelemente 3a, 3b, 3c, 3d auf dem äußeren Umfang der Rückflusssohle 1 entspricht dabei in etwa der Länge der Magnete 2 wie im Zusammenhang mit Figur 1 bereits beschrieben.

Jedes Halteelement 3a, 3b, 3c, 3d besteht aus einem ersten und zweiten Teilelement 9 und 10, wie nachfolgend beispielhaft anhand des Halteelementes 3b beschrieben wird. Die Teilelemente 9 und 10 sind beabstandet angeordnet, so dass sich zwischen den Teilelementen kein Material der Rückflusssohle 1 befindet. Auf diese Weise muss durch das Formwerkzeug 5 weniger Material plastisch verformt werden, um das Teilelement 9 an die Anlagefläche 4 des Magneten 2b anzulegen und gleichzeitig das Teilelement 10 an den Magneten 2a anzulegen.

Auch die Halteelemente gemäß Figur 4 können entweder als Stanzteil oder als Gussteil gefertigt werden, wie bereits im Zusammenhang mit Figur 1 beschrieben wurde.

Zur Verformung der Halteelemente 3 kann in einer Weiterbildung der Erfindung vorgesehen sein, zwei Formwerkzeuge 5a und 5b einzusetzen, welche jeweils gegenüberliegende Halteelemente 3a und 3c bzw. 3b und 3d gleichzeitig verformen. Auf diese Weise werden bei der Umfpormung der Halteelemente 3a und 3c durch die Formwerkzeuge 5a und 5b gegengleiche Kräfte auf den Rotor aufgebracht, so dass nur geringe Haltekräfte im Spannwerkzeug des Rotors aufgenommen werden müssen. Somit wird eine Beschädigung der Magnete 2a, 2b, 2c, 2d beim Umformen der Halteelemente 3a, 3b, 3c, 3d verhindert.

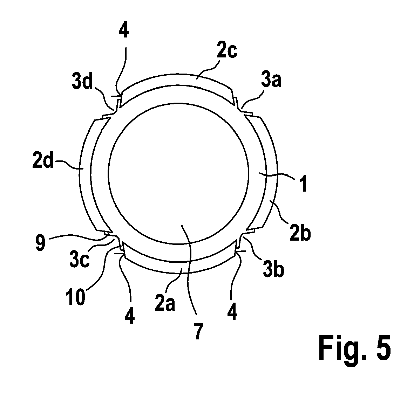

Figur 5 zeigt den Rotor gemäß Figur 4, nachdem die Halteelemente 3a, 3b, 3c, 3d mittels des Formwerkzeugs 5 verformt wurden. Am Beispiel des Halteelementes 3b ist ersichtlich, dass das erste Teilelement 9 des Halteelements 3b an der vorgesehenen Anlagefläche 4 des Magneten 2b zu liegen kommt. In gleicher Weise kommt das zweite Teilelement 10 des Halteelements 3b an der Anlagefläche 4 des Magneten 2a zu liegen. In gleicher Weise werden die weiteren Halteelemente 3c, 3d und 3a verformt, so dass sich wiederum eine zuverlässige Fixierung aller Magnete 2a, 2b, 2c und 2d auf dem äußeren Umfang der Rückflusssohle 1 ergibt.

Aufgrund der schrägen Anlageflächen 4 wird dabei zwischen zwei benachbarten Magneten jeweils ein Aufnahmeraum zur Aufnahme der Halteelemente 3a, 3b, 3c, 3d geschaffen, so dass diese nicht über die äußere Umfangsfläche der Magnete 2 überstehen.

Die Erfindung wurde vorstehend anhand einiger Ausführungsbeispiele beschrieben. Dem Fachmann ist selbstverständlich geläufig, dass die Erfindung nicht auf diese Ausführungsbeispiele beschränkt ist. Vielmehr können bei der Umsetzung der Erfindung Modifikationen und Änderungen vorgenommen werden, ohne die Erfindung an sich wesentlich zu verändern. Die vorstehende Beschreibung ist daher nicht als beschränkend, sondern als erläuternd anzusehen.

## Patentansprüche

1. Rotor für einen Elektromotor, aufweisend mindestens zwei Permanentmagnete (2a, 2b, 2c, 2d), welche an einer Rückflusssohle (1) befestigt sind, **dadurch gekennzeichnet, dass** zur Befestigung der Permanentmagnete (2a, 2b, 2c, 2d) mindestens ein Halteelement (3a, 3b, 3c, 3d, 8a, 8b) vorgesehen ist, welches einstückig mit der Rückflusssohle (1) verbunden ist.

2. Rotor nach Anspruch 1, **dadurch gekennzeichnet, dass** die Rückflusssohle (1) aus einem Metall oder einer Legierung oder einem Kunststoff besteht, welcher mit einem Metall oder einer Legierung gefüllt ist.

3. Rotor nach einem der Ansprüche 1 oder 2, **dadurch gekennzeichnet, dass** ein einzelnes Halteelement (3a, 3b, 3c, 3d) zwischen zwei Permanentmagneten (2a, 2b, 2c, 2d) angeordnet ist.

4. Rotor nach einem der Ansprüche 1 bis 3, **dadurch gekennzeichnet, dass** ein einzelnes Halteelement (3a, 3b, 3c, 3d) aus einem ersten Teilelement (9) und einem zweiten Teilelement (10) besteht, welche beabstandet angeordnet sind und wobei das erste Teilelement (9) an einem ersten Permanentmagnet (2b) anliegt und das zweite Teilelement (10) an einem zweiten Permanentmagnet (2a) anliegt.

5. Rotor nach einem der Ansprüche 1 bis 4, **dadurch gekennzeichnet, dass** zumindest ein Halteelement (3a, 3b, 3c, 3d, 8a, 8b) an zumindest einem Permanentmagnet (2a, 2b, 2c, 2d) an einer Anlagefläche (4) anliegt, welche gegenüber einer durch den Mittelpunkt des Rotors radial nach außen laufenden Linie geneigt ist.

6. Verfahren zur Herstellung eines Rotors für einen Elektromotor, bei welchem mindestens ein Permanentmagnet (2a, 2b, 2c, 2d) mit mindestens einem Halteelement (3a, 3b, 3c, 3d, 8a, 8b) an einer Rückflusssohle (1) befestigt wird, **dadurch gekennzeichnet, dass** mindestens ein Halteelement (3a, 3b, 3c, 3d, 8a, 8b) verwendet wird, welches einstückig mit der Rückflusssohle (1) verbunden ist und welches zur Befestigung mindestens eines Permanentmagneten (2a, 2b, 2c, 2d) plastisch verformt wird.

7. Verfahren nach Anspruch 6, **dadurch gekennzeichnet, dass** die Rückflusssohle (1) ein Kunststoffmaterial enthält und zur plastischen Verformung des Halteelementes ein Formwerkzeug (5) verwendet wird, welches sich auf einer gegenüber der Temperatur des Halteelementes erhöhten Temperatur befindet.

8. Verfahren nach einem der Ansprüche 6 oder 7, **dadurch gekennzeichnet, dass** auf der Umfangfläche der Rückflusssohle (1) gegenüberliegende Halteelemente (3a, 3b, 3c, 3d, 8a, 8b) gleichzeitig plastisch verformt werden.

9. Verfahren nach Anspruch 8, **dadurch gekennzeichnet, dass** die plastische Verformung durch zwei Formwerkzeuge (5a, 5b) erfolgt, welche von außen gegen die Umfangfläche der Rückflusssohle (1) geführt werden, wobei die Bewegungsrichtungen der Formwerkzeuge (5a, 5b) einen Winkel von etwa 180° einschließen.

10. Elektromotor mit einem Rotor nach einem de Ansprüche 1 bis 5.
